**Europäisches Patentamt**

**European Patent Office**

**Office européen des brevets**

(19)

(11) Veröffentlichungsnummer: **0 123 643 B1**

# EUROPÄISCHE PATENTSCHRIFT

(12)

(45) Veröffentlichungstag der Patentschrift: **22.01.92**

(51) Int. Cl.⁵: **G05D 23/19**, F24D 19/10

(21) Anmeldenummer: **84730025.8**

(22) Anmeldetag: **20.03.84**

Die Akte enthält technische Angaben, die nach dem Eingang der Anmeldung eingereicht wurden und die nicht in dieser Patentschrift enthalten sind.

(54) **Verfahren zum Steuern einer elektrischen Ausgangsgrösse mittels eines Pulspausenverhältnisses.**

(30) Priorität: **22.03.83 DE 8308855 U**

(43) Veröffentlichungstag der Anmeldung:
**31.10.84 Patentblatt 84/44**

(45) Bekanntmachung des Hinweises auf die Patenterteilung:
**22.01.92 Patentblatt 92/04**

(84) Benannte Vertragsstaaten:
**AT BE CH DE FR GB IT LI LU NL SE**

(56) Entgegenhaltungen:
**DE-A- 2 364 358**
**DE-A- 2 644 919**
**DE-A- 3 328 190**
**FR-A- 2 305 054**
**FR-A- 2 423 811**

(73) Patentinhaber: **Joh. Vaillant GmbH u. Co.**
**Berghauser Strasse 40 Postfach 10 10 20**
**W-5630 Remscheid 1(DE)**

(84) Benannte Vertragsstaaten:
**DE IT LU SE**

Patentinhaber: **n.v. Vaillant s.a.**
**rue Golden Hopestraat 15**
**B-1620 Drogenbos(BE)**

(84) Benannte Vertragsstaaten:
**BE**

Patentinhaber: **VAILLANT S.A.R.L**
**4, Rue des Oliviers Orly-Sénia 326**
**F-94537 Rungis Cedex(FR)**

(84) Benannte Vertragsstaaten:
**FR**

Patentinhaber: **VAILLANT Ges.m.b.H**
**Forchheimergasse 7 Postfach 56**
**A-1233 Wien(AT)**

(84) Benannte Vertragsstaaten:
**AT**

EP 0 123 643 B1

Patentinhaber: **Vaillant Ltd.**
**Vaillant House Medway City Estate Trident**
**Close**
**Rochester Kent ME2 4EZ(GB)**

(84) Benannte Vertragsstaaten:
**GB**

Patentinhaber: **Vaillant-Schonewelle B.V.**
**Paasheuvelweg 42 Postbus 23250**
**NL-1100 DT Amsterdam(NL)**

(84) Benannte Vertragsstaaten:
**NL**

Patentinhaber: **Vaillant GmbH**
**Riedstrasse 8**
**CH-8953 Dietikon 1(CH)**

(84) Benannte Vertragsstaaten:
**CH LI**

(72) Erfinder: **Hangauer, Wilfried, Dr.**
**Heidenstrasse 15**
**W-5609 Hückeswagen(DE)**

(74) Vertreter: **Heim, Johann-Ludwig**
**c/o Joh. Vaillant GmbH u. Co Postfach 10 10**
**20 Berghauser Strasse 40**
**W-5630 Remscheid 1(DE)**

EP 0 123 643 B1

**Beschreibung**

Die vorliegende Erfindung bezieht sich auf ein Verfahren sowie eine Schaltung gemäß den Oberbegriffen der nebengeordneten Hauptansprüche.

Es ist bekannt, die Öffnungen von Expansionsventilen im Kreis einer Wärmepumpe, sei es eine Kompressions- oder Absorptionswärmepumpe, über thermisch gesteuerte Ventile stetig zu variieren. Hierbei soll erreicht werden, daß in Abhängigkeit von einer vorgegebenen Funktion, zum Beispiel der Außentemperatur, der Querschnitt stetig geändert wird, um den Durchsatz an Kältemittel gemäß der Steuerfunktion ändern zu können. Es hat sich hierbei jedoch gezeigt, daß die notwendigen relativ kleinen Querschnitte des Expansionsventils bei kleiner Wärmeabnahme von der Wärmepumpe nur sehr schwer zu beherrschen sind.

Aus diesem Grund ist es auch schon vorgeschlagen worden, ein Expansionsventil mittels eines Pulspausen-Verhältnisses zu steuern, wobei die Zustände des Expansionsventils nur zwischen maximaler Öffnung und Schließung geändert werden können.

Die durchgesetzte Menge durch das Expansionsventil wird über die Schließzeiten beziehungsweise das Pulspausen-Verhältnis gesteuert. Hierbei sind jedoch noch keine Kritarien bekannt geworden, nach welchen mathematischen Abhängigkeiten das Pulspausen-Verhältnis eines solchen Expansionsventils gesteuert werden soll.

Aus der DE-OS 26 44 919 ist außerdem eine Vorrichtung zur Regelung der Temperatur eines Wärmeträgers mit einem Zweipunktregler bekannt. Der Zweipunktregler stellt sich dabei auf ein Pulspausen-Verhältnis von 0.5 ein. Diesem wird ein zweites Pulspausen-Verhältnis überlagert, das ein Maß für die aktuell benötigte Heizleistung darstellt. Dieses ist jedoch von Größen und Zusammenhängen abhängig, über die in der genannten DE-OS nichts ausgesagt wird.

Der vorliegenden Erfindung liegt die Aufgabe zugrunde, eine allgemeine Funktion zur Steuerung einer elektrischen Ausgangsgröße mittels eines Pulspausen-Verhältnisses sowie einer Schaltung anzugeben, mit der das Pulspausen-Verhältnis, insbesondere der Öffnungs- und Schließzustände des Expansionsventils einer Wärmepumpe, gesteuert werden kann.

Weiterhin besteht zum Beispiel bei einer brennstoffbeheizten Wärmequelle, wie zum Beispiel bei einem Umlauf-Wasserheizer oder -kessel die Aufgabe, ausgehend von einem bestimmten Brennstoffdurchsatz, die Drehzahl eines Abgasgebläses nachzuführen. Auch hierbei steht am Ausgang der Steuerung für die Drehzahl des Gebläses eine Impulsfolge an, die als Pulspausen-Verhältnis angesprochen werden kann und deren Mittelwert nach Maßgabe des Gasdurchsatzes nachzuführen ist.

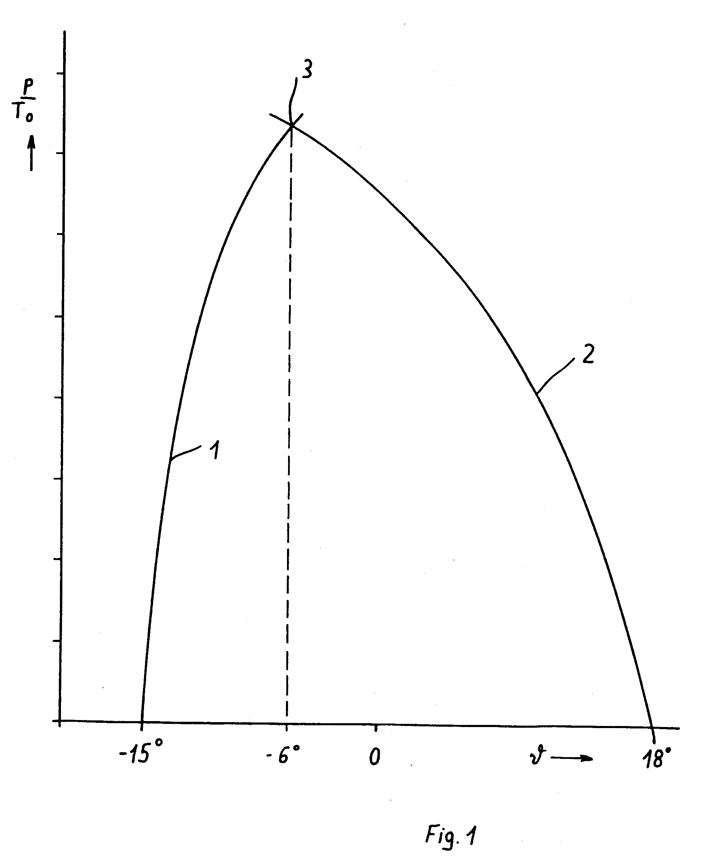

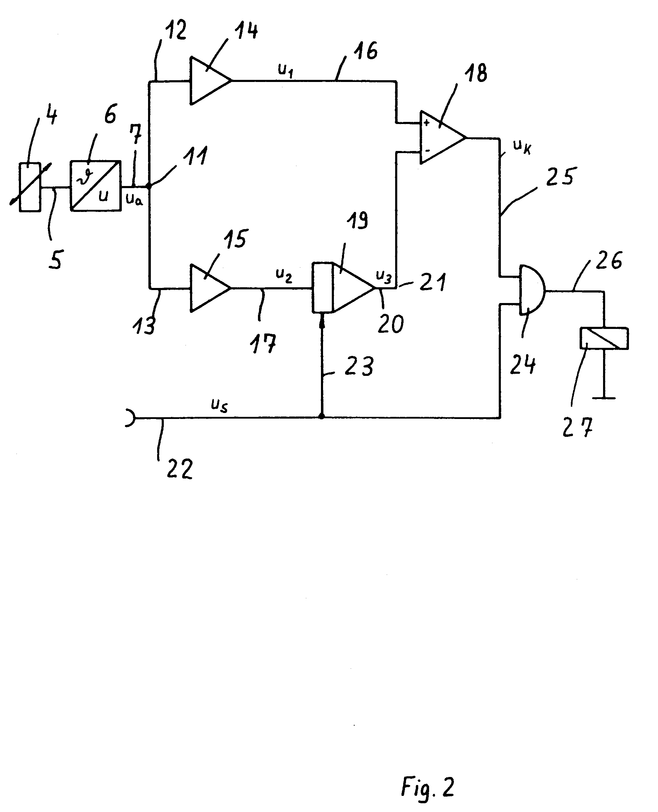

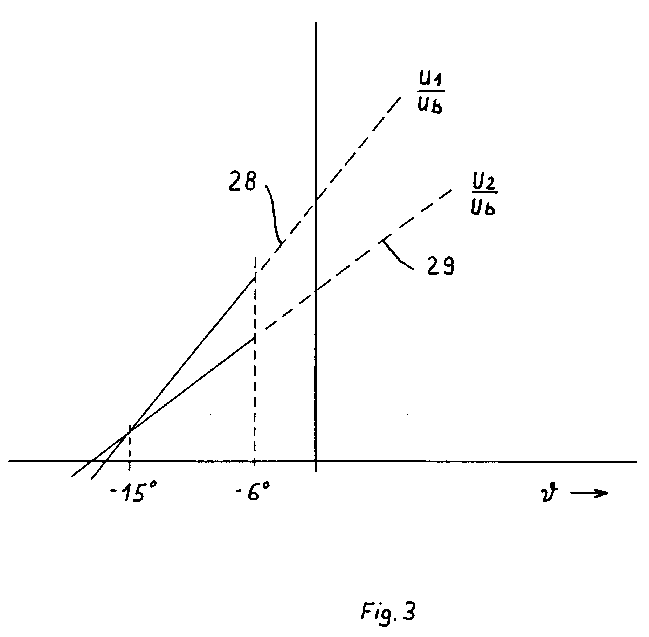

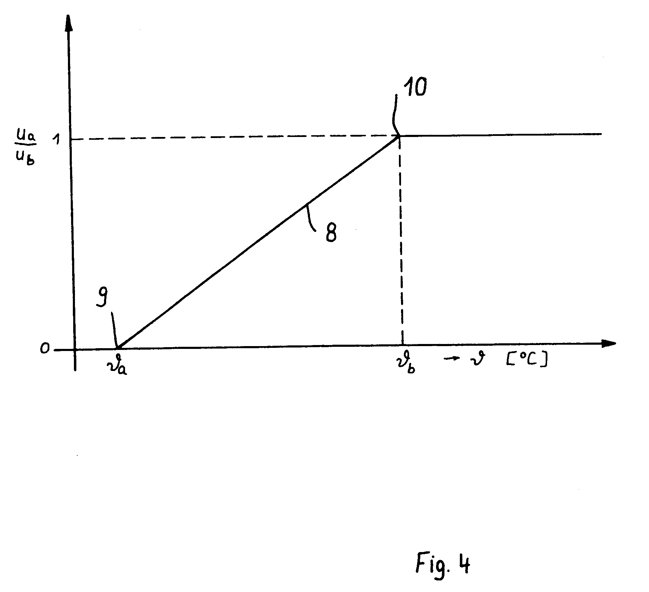

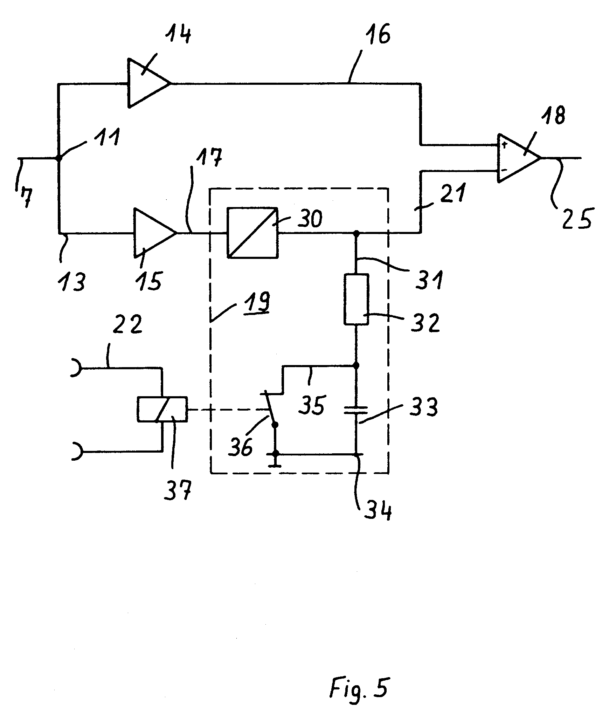

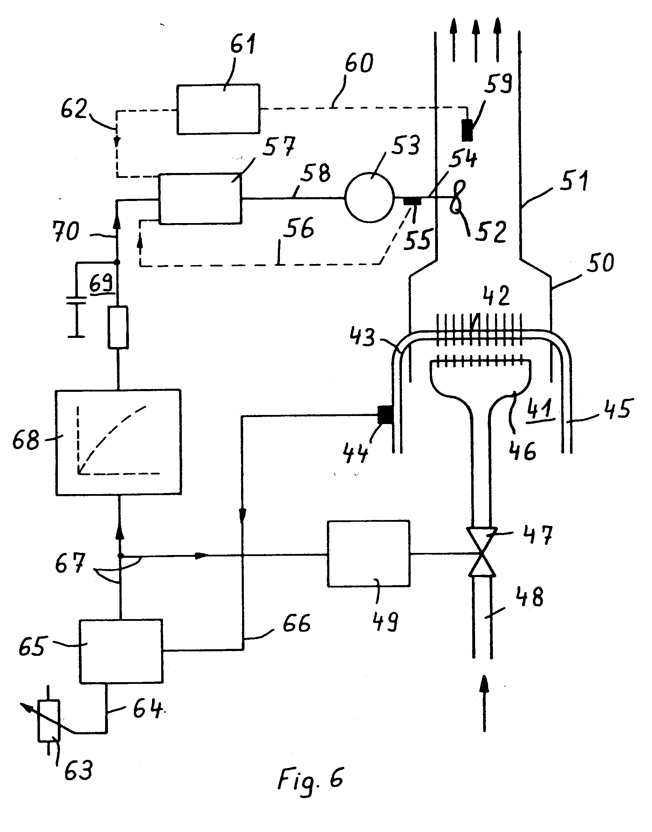

Weitere Ausgestaltungen besonders vorteilhafter Weiterbildungen sind Gegenstand der Unteransprüche beziehungsweise gehen aus der nachfolgenden Beschreibung hervor, die die Erfindung anhand der Figuren eins bis sechs der Zeichnung näher erläutert.

Es zeigen:
Figur eins ein Diagramm,
Figur zwei eine Schaltung,
Figur drei ein Diagramm zur Bemessung der Verstärker gemäß Figur zwei,
Figur vier ein Diagramm,
Figur fünf eine Schaltung für eine Wärmepumpe und
Figur sechs eine Schaltung für einen Umlauf-Wasserheizer.

In allen sechs Fällen bedeuten gleiche Bezugszeichen jeweils die gleichen Einzelheiten.

Das Diagramm gemäß Figur eins zeigt die Abhängigkeit des Pulspausen-Verhältnisses $P/T_o$ von der Außentemperatur $\vartheta$ in Grad Celsius. Der Nullpunkt des Diagramms ist angenommen bei einen Pulspausen-Verhältnis $P/T_o$ gleich Null und einer Außentemperatur von minus zwanzig Grad Celsius. Für das Ausführungsbeispiel wird eine Kompressionswärmepumpe unterstellt, obwohl die Steuerung ebensogut für eine Absorptions- beziehungsweise Resorptionswärmepumpe anwendbar ist. Es ist auch gleichgültig, ob es sich bei der Wärmepumpe um eine Heizwärmepumpe oder eine Kühlwärmepumpe handelt. Aus dem Diagramm sind zwei Kurventeile 1 und 2 ersichtlich, die sich in einem Punkt 3 berühren. Die Kurve 1 geht aus von einem $P/T_o$-Verhältnis gleich Null, das angesetzt ist bei einer Außenwandtemperatur von minus 15 Grad Celsius. Es wird hierbei davon ausgegangen, daß einer Wärmepumpe unterhalb einer Temperatur von minus 15 Grad Celsius keine nennenswerte Leistung mehr zu entnehmen ist, hier muß mit einem Kessel oder einer sonstigen Wärmequelle ausschließlich geheizt werden.

Im Bereich von minus 15 Grad Celsius bis zum Abszissenwert des Punktes 3, das sind minus 6 Grad Celsius, hat es sich herausgestellt, daß die Kurve 1 die optimale Kurve wäre, nach der mittels dar Wärmepumpe und unter Zuschaltung einer beliebigen Wärmequelle zu heizen wäre. Es besteht nun die Aufgabe, eine Funktion zu finden, die dieser optimalen Kurve 1 am nächsten kommt.

Im Punkt 3 beginnt die Wärmepumpe in Richtung auf höhere Außentemperaturen $\vartheta$ ausschließlich

3

alleine zu heizen, wobei nur bis zu einem Außentemperaturwert von 18 Grad Celsius Heizleistung benötigt wird. Die hier anzustrebende Kennlinie entspricht der Kurve 2. Es herrscht die Eigentümlichkeit, daß beide Kurven durch eine mathematische Abhängigkeit gleicher Art darzustellen sind. Durch Wahl geeigneter Koeffizienten kommt eine spezielle Kurve 1 oder 2 zustande.

Im Zuge aufwendiger Entwicklungsarbeiten wurde nun gefunden, daß die beiden Kurven 1 und 2 durch eine Gleichung folgender Art am besten repräsentiert werden:

$$(1) \quad P/T_0 = P_0 \frac{\vartheta - \vartheta_1}{\vartheta - \vartheta_2}$$

Hierin bedeuten P die Öffnungzeit des Expansionsventils pro Periode in Sekunden, $T_0$ die Periodendauer in Sekunden, $P_0$ eine dimensionslose Konstante, $\vartheta$ die Außentemperatur in Grad Celsius und $\vartheta 1$ und $\vartheta 2$ zwei gewählte Konstanten mit der Dimension Grad Celsius. Die Werte für $P_0$, $T_0$, $\vartheta 1$ und $\vartheta 2$ sind Konstanten, für deren Wahl folgendes gilt:

Für das periodische Öffnen und Schließen wird zunächst eine Periodendauer $T_0$ festgelegt. Der Wert wird zweckmäßig bei einer bestimmten Wärmepumpe zwischen einem Mindestwert gewählt, der im Hinblick auf das zu häufige Schalten des Expansionsventils nicht weiter unterschritten werden soll, und einem Maximumwert gewählt, der noch einen annähernd kontinuierlichen Verdampfungsprozeß im Verdampfer gewährleistet. Die spezielle Wahl der genauen Größe der Konstante kann aber nur in Abhängigkeit von der bekannten Wärmepumpe erfolgen. Im Ausführungsbeispiel wird eine Periodendauer $P_0$ von sechzig Sekunden gewählt.

$\vartheta 1$ wird im Ausführungsbeispiel zu minus 15 Grad Celsius gewählt. Man könnte $\vartheta 1$ so legen, daß sie der Auslegungstemperatur einer Heizungsanlage entspricht. Durch die Art und Wahl von $\vartheta 1$ wird der Punkt definiert, bei dessen Unterschreiten als Wert der Außentemperatur keine Wärmelieferung erfolgt. Wenn der Zähler des Bruches $\vartheta$ minus $\vartheta 1$ Null wird, wird nämlich das Pulspausen-Verhältnis Null, damit bleibt das Expansionsventil geschlossen. Der Wert für $\vartheta 2$ wird bevorzugt im Ausführungsbeispiel zu minus 20 Grad Celsius gewählt. Für die allgemeine Wahl der Werte von $\vartheta_2$ und $T_0$ gilt, daß der Verlauf des Pulspausen-Verhältnisses die Sollwertkurve 1 möglichst exakt approximiert.

Die Wahl von $\vartheta_2$ hängt nur von der Lagekrümmung der Kurve ab, während die Konstante $P_0$ so festzulegen ist, daß der im Punkt drei in Figur eins geforderte Wert des Pulspausen-Verhältnisses zahlenmäßig eingehalten wird. Im weiteren wird dieser Wert mit $P_S$ bezeichnet.

Da auch die Kurve 2 durch die Gleichung 1 definiert wird, gilt hier für die Wahl der Konstanten folgendes: $\vartheta 1$ wird für die Beschreibung der Funktion gemäß Kurve 2 zu 18 Grad Celsius gewählt, das ist der Wert, bei dessen Überschreiten keine Heizleistung mehr notwendig ist. Die Überlegungen zur Wahl von $P_0$ verändern sich nicht. Für die Wahl von $\vartheta 2$ gilt wieder, daß die Wahl so erfolgen muß, daß der Sollwert des Pulspausen-Verhältnisses der optimalen Vorgabekurve 2 weitestgehend entsprechen soll. Im Ausführungsbeispiel ist $\vartheta 2$ zu 33 Grad Celsius gewählt.

Durch diese Überlegungen kann somit die Kurve des Pulspausen Verhältnisses $P/T_0$ von der minimalen Außentemperatur, bis zu der eine Wärmeleistung der Wärmepumpe noch erfolgen soll, bis zur maximalen Außentemperatur oberhalb derer keine Wärmeleistung der Wärmepumpe mehr erfolgen soll, definiert werden. Das Maximum des Pulspausen-Verhältnisses liegt erkennbar bei dem Punkt, bei dem eine alleinige Beheizung der Heizungsanlage durch die Wärmepumpe gerade noch möglich ist.

Aus der Figur zwei geht die Schaltung hervor, mit der die Steuerung gemäß Gleichung 1 ausgeführt wird. Die Schaltung gemäß Figur zwei weist einen Außentemperaturfühler 4 auf, der aus einem temperaturabhängigen Widerstand, beispielsweise einem NTC-Widerstand, besteht.

Der Widerstand ist über eine Leitung 5 an einen Meßwertumformer 6 angeschlossen, der an einem Ausgang 7 eine Spannung abgibt, die der Bedingung gemäß Gleichung zwei gehorcht. Dieser Meßwertumformer gibt ein mit der Außentemperatur nahezu proportional variierendes Signal ab.

$$(2) \quad \frac{U_a}{U_b} = \frac{\vartheta - \vartheta_a}{\vartheta_b - \vartheta_a}$$

Hierin bedeuten $U_a$ die Ausgangsspannung auf der Leitung 7 in Volt, $U_b$ eine Bezugsspannung, $\vartheta$ die

laufende Außentemperatur in Grad Celsius und $\vartheta a$ und $\vartheta b$ die Temperaturwerte in Grad Celsius.

Für die Wahl von $\vartheta a$ und $\vartheta b$ ist Figur vier zu vergleichen. In der Figur vier ist ein Diagramm aufgezeichnet, das einen Spannungsverlauf 8 zeigt, der in Abhängigkeit von der Außentemperatur $\vartheta$ das Spannungsverhältnis $U_a/U_b$ aufzeigt. Hierbei ist festgelegt, daß der Wert $\vartheta a$ eine Temperatur bedeutet, bei der der Meßwertwertumsetzer 6 an seinem Ausgang eine Spannung 0 entsprechend einem $U_a/U_b$ gleich Null liefert. Bei einer anderen Temperatur $\vartheta_b$ ist hingegen ein Spannungsverhältnis $U_a/U_b$ gleich eins erreicht. Die dazwischenliegende Gerade verläuft somit zwischen den Punkten 9 und 10. Die Werte von $\vartheta_a$ und $\vartheta_b$ werden so gewählt, daß in dem Bereich zwischen $\vartheta a$ und $\vartheta b$ die gesamte Kurve gemäß Figur eins, also die beiden Kurventeile 1 und 2, hineinpassen. Das bedeutet, daß $\vartheta_a$ kleiner als minus 15 Grad Celsius, $\vartheta_b$ größer als 18 Grad Celsius sein soll. Wird hingegen nur eine Teilkurve 1 oder 2 betrachtet, so könnte für die Kurve 1 $\vartheta_a$ kleiner als minus 15 Grad Celsius sein, $\vartheta_b$ hingegen größer minus 6 Grad Celsius sein. Für die Kurve 2 würde dann analog gelten, daß $\vartheta_a$ kleiner als minus 6 Grad Celsius, $\vartheta_b$ hingegen größer als 18 Grad Celsius ist.

Zurückkehrend zur Figur zwei verzweigt sich der Ausgang des Meßwertumsetzers 6 in einem Verzweigungspunkt 11 in zwei Leitungen 12 und 13, die den Eingängen zweier Verstärker 14 und 15 zugeführt sind. Bei den Verstärkern 14 und 15 handelt es sich um Halbleiterproportionalverstärker, die folgenden Bedingungen gehorchen müssen. Für den Verstärker 14 gilt, daß er die Funktion gemäß Gleichung 3 erfüllt.

$$( 3 ) \qquad \frac{U_1}{U_b} = a_1 \frac{U_a}{U_b} + b_1$$

Hierbei sind $U_1$ die Ausgangsspannung in Volt, $U_b$ die Bezugsspannung in Volt und $a_1$ und $b_1$ dimensionslose Koeffizienten. Für die Wahl der Koeffizienten $a_1$ und $b_1$ gilt eine Abhängigkeit von $\vartheta 1$ und $\vartheta 2$, auf die später noch eingegangen werden wird. Der Verstärker 15 gehorcht der Abhängigkeit gemäß Gleichung 4,

$$( 4 ) \qquad \frac{U_2}{U_b} = a_2 \frac{U_a}{\cdot U_b} + b_2$$

wobei für $a_2$ und $b_2$ das eben Gesagte analog gilt. Die Ausgänge der beiden Verstärker 14 und 15 sind auf Leitungen 16 und 17 geschaltet, wobei die Leitung 16 unmittelbar den einen Eingang des Komparators 18 bildet, die Leitung 17 hingegen auf einen Integrator 19 geschaltet ist, dessen Ausgang 20 über eine Leitung 21 mit dem invertierenden Eingang des Komparators 18 verbunden ist.

Auf einer Leitung 22 steht ein Rechteckspannungsignal mit der Periodendauer $T_o$ an. Die Leitung 22 ist über eine Leitung 23 mit dem Integrator 19 verbunden, sie ist auch mit einem Eingang eines Und-Gatters 24 verbunden, dessen anderer Eingang 25 den Ausgang des Komparators 18 bildet. Ein Ausgang 26 des Und-Gatters führt zu einer Magnetspule 27, die die Antriebsspule des Expansionsventils ist.

Für die Ausgestaltung und Bemessung der Verstärker wird nunmehr auf das Diagramm gemäß Figur drei zurückgegriffen. In dem Diagramm ist auf der Abszisse die Außentemperatur $\vartheta$ in Grad Celsius aufgetragen und in der Ordinate das Verhältnis der Spannung $U_1$ beziehungsweise $U_2$ zu $U_b$. Der Verstärker 14 gehorcht der Kurve 28, der Verstärker 15 der Kurve 29. Beide Kurven sind Geraden und sind dadurch definiert, daß ihr Schnittpunkt beim Wert von $\vartheta 1$, das heißt bei minus 15 Grad Celsius, liegt. Die Steigungen der Kurven sind so gewählt, daß im Arbeitsbereich der Steuerung, das heißt im Falle der Kurve 1 in Figur eins von minus 15 bis minus 6 Grad Celsius die Spannung $U_1$ größer als die Spannung $U_2$ ist. Wird hingegen der Bereich der Kurve 2 abgefahren, würde der Schnittpunkt der Kurven bei 18 Grad Celsius liegen, das entspricht dem Schnittpunkt der Kurve 2 mit der $\vartheta$-Achse. Die Steigung wäre dann negativ, auch dann müßte die Spannung $U_1$ größer als die Spannung $U_2$ sein. Die Kurven würden dann nach links oben verlaufen.

Der Integrator 19 ist gemäß Figur fünf im Prinzip aufgebaut. Der Integrator 19 weist einen im Zuge der Leitung 17 der Figur zwei angeordneten Spannungsstromumsetzer 30 auf, dessen Ausgang an die Leitung 21 angeschlossen ist. Die Leitung 21 ist über eine Leitung 31, in die ein Widerstand 32 mit einem Kondensator 33 in Serie geschaltet ist, mit dem einen Punkt 34 der Bezugsspannungsquelle $U_b$ verbunden. Zwischen dem Kondensator und dem Widerstand zweigt eine Leitung 35 ab, die über einen Uhrkontakt 36 gleichfalls mit der Bezugsspannungsquelle 34 verbunden ist. Der Uhrkontakt 36 wird von einer Relaisspule 37 betätigt, die an die an der Leitung 22 anliegende Spannungsquelle angeschlossen ist. Das bedeutet, daß immer beim Vorliegen eines Impulses gemäß der Periodendauer $T_o$ das Relais 37 mit Spannung beaufschlagt wird und seinen Kontakt 36 öffnet.

Für die Art und Größe der Koeffizienten $a_1$, $b_1$, $a_2$ und $b_2$ gilt nun folgendes. Die Differenz der beiden Koeffizienten $a_1$ und $b_1$ gehorcht der Beziehung gemäß Gleichung 5.

$$(5) \qquad a_1 - a_2 = 1 + \frac{P_o \cdot T_o}{\tau}$$

Die Differenz der Koeffizienten $b_1$ und $b_2$ folgt Gleichung 6.

$$(6) \qquad b_1 - b_2 = \frac{\vartheta_1 + \vartheta_a}{\vartheta_b - \vartheta_a} \left( 1 + \frac{P_o T_o}{\tau} \right)$$

Schließlich folgt der Quotient aus $b_2$ durch $a_2$ der Beziehung gemäß Gleichung 7.

$$(7) \qquad \frac{b_2}{a_2} = \frac{\vartheta_2 + \vartheta_a}{\vartheta_b - \vartheta_a}$$

Hierin bedeuten $a_1$ der Proportionalwert der Steigung, entspricht dem Steigungswinkel der Kurve 28 in Figur drei und $b_1$ der Ordinatenwert bei $\vartheta$ gleich $\vartheta a$. Analoges gilt für die Koeffizienten $a_2$ und $b_2$. Die Koeffizienten $a_2$, $a_2$, und $b_1$, $b_2$ sind dimensionslos. $P_o$ bedeutet, wie eingangs schon erwähnt, eine Konstante. $T_o$ bedeutet die Periodendauer in Sekunden, $\tau$ die Integrationskonstante des Integrators 19 in Sekunden. Die Beziehungen gemäß Gleichungen 5 bis 7 können auf mathematischem Wege abgeleitet werden. Vom mathematischen Gesichtspunkt her können die Größen $T_o$, $\tau$ und eine der Größen $a_1$, $a_2$, $b_1$ oder $b_2$ frei gewählt werden. Das heißt nicht, daß nicht aus praktischen Gesichtspunkten für die Größen Grenzen festliegen, die man tunlichst einhalten sollte. Sind somit drei Größen festgelegt, so kann aufgrund der bekannten Krümmung der Kurve 1 oder 2 beziehungsweise deren bereits festliegenden Endpunkten der relativ genaue Verlauf der Kurve approximiert werden.

Die Wirkungsweise der in den Figuren zwei und fünf beschriebenen Schaltung ist wie folgt: Es wird von einer beliebigen Außentemperatur $\vartheta$ ausgegangen, die irgendwo im Bereich zwischen minus 15 Grad und minus 6 Grad - vergleiche Figur eins - liegt. Das bedeutet, daß ein zeitkonstantes Spannungssignal $U_a$ auf der Leitung 7 vorliegt. Dieses wird in den beiden Verstärkern 14 und 15 verstärkt, und zwar gemäß den Verstärkungsfaktoren der Gleichungen 3 und 4. Die entsprechenden Spannungen liegen auf den Leitungen 16 und 17 an, das Signal der Leitung 16 somit auch schon unmittelbar am Komparator 18. Das am Ausgang des Verstärkers 15 anliegende Signal wird in den Integrator 19 gegeben, der die Eigenschaft hat, ein Ausgangssignal zu erzeugen, das in seiner Größe dem Eingangssignal entspricht, wenn auf der Ansteuerleitung 23 kein Signal vorhanden ist. Das Spannungssignal der Leitung 16 entspricht dem Signal $U_1$, das Spannungssignal der Leitung 17 dem Spannungssignal $U_2$. Damit liegt die Spannung $U_2$ über die Leitung 21 am invertierten Eingang des Komparators 18 an. Da diese Spannung kleiner als die Spannung $U_1$ ist, ist der Komparator 18 durchgeschaltet, das heißt, über die Leitung 25 liegt am Und-Gatter 24 ein Signal an, was aber mangels eines Signals auf der Leitung 22 an die Erregerspule des Expansionsventils noch nicht weitergegeben wird.

Auf der Leitung 22 liegt aber ein rechteckförmiges Spannungssignal mit der Periodendauer $T_o$ an. Das bedeutet, daß zu Beginn einer Periode ein positives Spannungssignal über die Leitung 23 an den Integrator gegeben wird, das gleichzeitig am anderen Eingang des Und-Gliedes 24 anliegt. Das bedeutet, daß zum Beginn der Periode mit der Periodendauer $T_o$ das Und-Gatter 24 durchschaltet und das Expansionsventil öffnet. Das Spannungssignal bewirkt, vergleiche den Aufbau des Integrators 19 gemäß Figur fünf, ein Öffnen des Kontaktes 36. Damit kann der Kondensator 33 über den Widerstand 32 vom Ausgang der Konstantstromquelle 30 geladen werden. Der Konstantstrom hängt ausschließlich in seinem Absolutwert von der Höhe der Außentemperatur ab. Somit steigt die Kondensatorladespannung mit der Zeit an, bis sie gleich dem Wert von $U_1$ ist. Damit schaltet der Komparator 18 ab. Der eine Eingang des Und-Gliedes wird spannungslos, damit wird die Erregerspule des Expansionsventils stromlos, die Einschaltdauer während der Periode $T_o$ ist beendet.

Aus der Figur eins läßt sich entnehmen, daß die Einschaltdauer der Öffnung des Expansionsventils mit der Außentemperatur variabel ist, und zwar in dem Sinne, daß, ausgehend von einem Maximum $P_S$ der Einschaltzeit des Expansionsventils bei einer Außentemperatur von minus 6 Grad, der Wert der Einschaltdauer abnimmt, wenn die Außentemperatur sich zu höheren oder tieferen Werten verändert. Beide Verstärker 14 und 15 weisen Umschaltglieder auf, die die Koeffizienten $a_1$, $a_2$, $b_1$ und $b_2$ auf andere Werte umschalten, wenn höhere Temperaturen als minus 6 Grad Celsius gemäß der Kurve 2 gefahren werden sollen. Die Geraden 28 und 29 in Figur drei gelten daher nur für minus 6 Grad und kleinere Werte bis minus 15 Grad. Für den Wert minus 6 Grad gilt beispielsweise, daß $U_1/U_b$ = 0,43 und $U_2/U_b$ = 0,29 ist. Das bedeutet, daß der Kondensator 33 beim Öffnen des Kontakts 36 mit einem Strom geladen wird, der proportional dem Wert $U_2/U_b$ ist. Die Spannungsdifferenz, um die der Spannungswert auf der Leitung 21 erhöht werden muß, damit der Komparator 18 abschaltet, entspricht der Ordinatendifferenz zwischen den beiden Kurven 28 und 29 bei minus 6 Grad Celsius. Wird nun eine niedrigere Außentemperatur betrachtet, zum Beispiel minus 10 Grad Celsius, so wird ersichtlich, daß sowohl die Werte für $U_1/U_b$ als auch für $U_2/U_b$ kleiner werden. Der Strom wird aber nicht proportional zur Spannungsdifferenz kleiner, da der Schnittpunkt der beiden Geraden 28 und 29 bei einem Spannungswert liegt, bei dem noch ein bestimmter Mindeststrom vorhanden ist. Somit ist das Verhältnis der Ordinatendifferenz zwischen den Kurven 28 und 29 in jedem Abszissenpunkt zum Ordinatenwert der Kurve 29 nicht konstant. Für den Fall, daß die Steuerung der Wärmepumpe die Kurve 2 in Figur eins abfährt, ist zu berücksichtigen, daß hier dann die Spannungen $U_1/U_b$ und $U_2/U_b$ mit einer zu der Steigung in Figur drei negativen Steigung verlaufen. Es bleibt aber die gleiche Überlegung bezüglich der Ordinaten und Ordinatendifferenzwerte. Somit wird auch im Abfahren der Kurve 2, ausgehend von einer maximalen Einschaltdauer in Punkt 3 innerhalb einer Periode, die Einschaltdauer des Expansionsventils innerhalb der Periode bei wachsenden Außentemperaturen kleiner.

Es sei angemerkt, daß die Ordinatenwerte der Kurven 1 und 2 in Figur eins im Punkt 3 nicht deckungsgleich sein müssen. So ist es zum Beispiel möglich, daß die Kurve 1 im Punkt 3 zu einem anderen Ordinatenwert führt als die Kurve 2 im Punkt 3. Hierbei kann zwischen beiden Kurven eine positive und negative Differenz entstehen. Da die Ordinatenwerte der Kurven 1 und 2 in Figur eins im Punkt 3 der Größe $P_S$ zugeordnet werden, kann die Größe $P_S$ für den Verlauf der Kurve 1 und für den Verlauf der Kurve 2 unterschiedlich gewählt werden. Dieser Wert würde dann auch umgeschaltet werden.

Es versteht sich, daß für den Verlauf des Kurvenastes 2 in Figur eins die gleichen Überlegungen und Berechnungen und Festlegungen der Koeffizienten durchgeführt werden müssen, wie sie anhand der Aufstellung des Kurvenastes 1 entwickelt wurden.

Figur sechs behandelt die Anwendung der erfindungsgemäßen Steuerung auf einem Umlauf-Gaswasserheizer. Dieser Gas-Wasserheizer 41 weist einen Wärmetauscher 42 auf, der einen Lamellenblock besitzt, durch den eine Rohrleitung führt, die an eine Vorlaufleitung 43 angeschlossen ist, die mit einem Vorlauftemperaturfühler 44 versehen ist. Die Vorlaufleitung 43 führt über eine Serienschaltung von Heizkörpern oder einen Brauchwasserbereiter und einer Pumpe zurück zur Rücklaufleitung 45, die wieder an den Wärmetauscher 42 angeschlossen ist. Der Wärmetauscher 42 wird von einem Gasbrenner 46 beheizt, der über eine mit einem Magnetventil 47 versehene Gasleitung 48 gespeist ist. Das Magnetventil 47 läßt Proportionalbetrieb zu und ist von einem Stellglied 49 beherrscht. Brenner 46 und Wärmetauscher 42 sind innerhalb einer Verbrennungskammer 50 angeordnet, die nach oben einen Abgasauslaß 51 aufweist, in der ein Abgasgebläse 52 angeordnet ist. Das Abgasgebläse wird von einem Lüftermotor 53 beherrscht, der das Gebläse über eine Welle 54 antreibt, an der ein Drehzahlgeber 55 angeschlossen ist, der über eine elektrische Meßwert-Übertragungsleitung 56 an einen Steuerungsgeber 57 angeschlossen ist. Der Steuerungsgeber 57 beaufschlagt über eine Stelleitung 58 den Lüftermotor 53. Dem Abgasgebläse strömungsmäßig nachgeschaltet ist eine Abgassonde 59 in Form eines Sauerstoff- oder Kohlendioxydfühlers, die über eine Meßleitung 60 mit einem Regler 61 verbunden ist, dessen Ausgangssignal über eine Leitung 62 auf den Steuerungsgeber 57 geschaltet ist.

Es ist ein Außentemperaturfühler 63 vorgesehen, der auch durch ein handbetätigtes Potentiometer dargestellt sein könnte, der aber in jedem Fall über eine Leitung 64 als Sollwertgeber auf einen Vorlauftemperaturregler 65 geschaltet ist. An diesem Vorlauftemperaturregler liegt auch das Signal des Vorlauftemperaturfühlers 44 als Istwertgeber über eine Leitung 66 an. Der Ausgang des Reglers 65 ist über eine Leitung 67 auf die die Erfindung beinhaltende Steuerung 68 geschaltet. Die Leitung 67 ist aber auch mit dem Stellglied 49 des Proportionalmagnetventils 47 verbunden. Die Steuerung 68 ist über ein RC-Glied 69 im Zuge einer Leitung 70 gleichfalls auf einen Eingang des Steuerungsgebers 57 geschaltet.

Auf die Steuerung 68 wirkt das Ausgangssignal des Vorlauftemperaturreglers 65 ein, so daß einmal bei Vorhandensein einer Regelabweichung der Vorlauftemperatur der Gasdurchsatz nachgestellt wird und zum anderen die Lüfterdrehzahl nachreguliert wird. Das gleiche geschieht auch, wenn der Regler defekt ist und ein eigentlich nicht passendes Ausgangssignal vom Regler abgegeben wird. Die Aufgabe der Erfindung ist es hier, den analogen Wert auf der Leitung 67 in eine entsprechende Lüfterdrehzahl umzusetzen. Hierzu ist es natürlich erforderlich, im Rahmen der Steuerung 68 eine Zuordnung zwischen der Drehzahl des Gebläses und dessen Fördervolumen vorzusehen. Weiterhin muß natürlich im Rahmen der Steuerung 68 berücksichtigt werden, daß ein bestimmter Zusammenhang zwischen dem analogen Signal am Ausgang des Reglers 65 und dem wirklichen Gasdurchsatz in der Leitung 48 besteht.

Mit der Steuerung 68 besteht die Möglichkeit, durch nichtlineare Variation des Pulspausen-Verhältnisses gemäß Gleichung 1 die Lüfterdrehzahl zur Steuerung des Luftdurchsatzes dem jeweiligen Gasdurchsatz anzupassen. Mit Hilfe des RC-Gliedes 69 wird der zeitliche Mittelwert der Ausgangsspannung der Steuerung 68 gebildet, so daß am Eingang des Steuerungsgebers 57 eine analoge Steuerspannung als Drehzahlsollwert anliegt.

Auch hier entspricht das Verhältnis $P : T_o$ der relativen Einschaltdauer innerhalb einer Periode, $P_o$ ist eine dimensionslose Konstante, $T_o$ ist die Periodendauer in Sekunden, $\vartheta$ ist die Ausgangsspannung am Ausgang des Reglers 65. Das bedeutet, daß zum Beispiel der Punkt 11 im Ausführungsbeispiel gemäß Figur zwei dem Spannungsniveau auf der Leitung 67 am Ausgang des Reglers 65 entspricht. Die Werte $\vartheta 1$ und $\vartheta 2$ sind gewählte Konstanten mit der Dimension Volt. $\vartheta$ besitzt dann auch die Dimension Volt.

Es versteht sich weiterhin, daß die Angaben zu dem Ausführungsbeispiel bezüglich der Frequenz des Pulspausenverhältnisses, die für die Wärmepumpe galten, nicht unbedingt auf die Verhältnisse zum Ausführungsbeispiel nach Figur sechs zu übertragen sind. Hier ist die Frequenz erheblich höher zu wählen. Weiterhin wäre zum Beispiel der Schalter mit dem Bezugszeichen 36 nach Figur fünf nicht als Relaiskontakt, sondern als steuerbarer Halbleiter auszubilden.

## Patentansprüche

1. Verfahren zum Steuern einer elektrischen Ausgangsgröße durch Unterbrechung derselben im Pulspausen-Verhältnis, dadurch gekennzeichnet, daß das Verhältnis folgender Beziehung gehorcht:

$$(1) \quad P/T_0 = P_0 \; \frac{\vartheta - \vartheta_1}{\vartheta - \vartheta_2}$$

wobei $P/T_o$ die relative Einschaltdauer innerhalb einer Periode, $P_o$ eine dimensionslose Konstante, $T_o$ die Periodendauer in Sekunden, $\vartheta$ eine linear variable Eingangsgröße und $\vartheta 1$ und $\vartheta 2$ gewählte Konstanten sind.

2. Verfahren nach Anspruch 1, wobei die Ausgangsgröße zur Beaufschlagung eines elektromagnetischen Expansionsventils einer Wärmepumpe dient, um die Öffnungs- und Schließzustände des Expansionsventils im Pulspausen-Verhältnis festzulegen, dadurch gekennzeichnet, daß in der das Pulspausen-Verhältnis bestimmenden Beziehung $\vartheta$ die laufende Außentemperatur in Grad Celsius ist und $\vartheta 1$ und $\vartheta 2$ gewählte Konstanten mit der Dimension Grad Celsius sind.

3. Verfahren nach Anspruch 1, wobei die Ausgangsgröße zur Beaufschlagung eines elektrischen Motors eines Abgasgebläses in einer brennstoffbeheizten Wärmequelle dient, um die Drehzahl des Abgasgebläses zu steuern, dadurch gekennzeichnet, daß ein rechteckförmiges elektrisches Spannungssignal erzeugt wird mit einem Tastverhältnis gemäß der das Pulspausen-Verhältnis bestimmenden Beziehung, wobei $\vartheta$ eine variable Eingangsgröße mit der Dimension Volt ist und $\vartheta 1$ und $\vartheta 2$ gewählte Konstanten mit der Dimension Volt sind, und daß aus diesem Spannungssignal über ein RC-Glied ein zeitlicher Mittelwert gebildet wird, der einen Drehzahlsollwert darstellt.

4. Schaltung zum Steuern einer elektrischen Ausgangsgröße durch Unterbrechung derselben im Pulspausen-Verhältnis, dadurch gekennzeichnet, daß zwei Verstärker (14, 15) vorgesehen sind, die mit einem Spannungssignal ($U_a$) gespeist werden, das mit einer Eingangsgröße, insbesondere der Außentemperatur, linear variabel ist, daß der Ausgang des ersten Verstärkers (14) mit dem Eingang eines Komparators (18) verbunden ist, dessen Ausgang einen Eingang eines Und-Gatters (24) bildet, daß der Ausgang des zweiten Verstärker (15) mit dem Eingang eines Integrators (19) verbunden ist, dessen Ausgang an den zweiten Eingang des Komparators (18) angeschlossen ist und der mit einer Rechteckspannung der Periodendauer $T_o$ beaufschlagtist, wobei die Rechteckspannung den zweiten Eingang des Und-Gatters (24) bildet, und daß dem Und-Gatter (24) eine Betätigungseinrichtung, insbesondere für das Expansionsventil einer Wärmepumpe, nachgeschaltet ist.

5. Schaltung nach Anspruch 4, dadurch gekennzeichnet, daß der Integrator (19) ein gesteuerter Integrator ist.

6. Schaltung nach Anspruch 5, dadurch gekennzeichnet, daß der Integrator aus einer Serienschaltung eines Widerstandes (32) und eines Kondensators (33) besteht, der von einer gesteuerten Konstantstromquelle (30) gespeist ist.

7. Schaltung nach Anspruch 6, dadurch gekennzeichnet, daß zur Steuerung des Integrators ein Schalter (36) vorgesehen ist, der parallel zum Kondensator (33) des Integrators angeordnet ist und der den Kondensator (33) in Abhängigkeit von der Periodendauer $T_o$ ganz oder teilweise entlädt.

8. Schaltung nach einem der Ansprüche 6 oder 7, dadurch gekennzeichnet, daß die gesteuerte Konstantstromquelle (30) einen Konstantstrom abgibt, der in Abhängigkeit von der Höhe der Eingangsgröße, vorzugsweise der Außentemperatur, variabel ist.

9. Schaltung nach einem der Ansprüche 6 bis 8, dadurch gekennzeichnet, daß die gesteuerte Konstantstromquelle (30) im Ausgang des Verstärkers (15) angeordnet ist.

10. Schaltung nach einem der Ansprüche 4 bis 9, dadurch gekennzeichnet, daß der eine Verstärker (14) der Bedingung

$$(3) \qquad \frac{U_1}{U_b} = a_1 \frac{U_a}{U_b} + b_1$$

gehorcht, wobei $U_1$ die Spannung am Ausgang des Verstärkers (14), $U_b$ eine Bezugsspannung, $U_a$ die Eingangsspannung des Verstärkers (14), alle in Volt, und $a_1$ und $b_1$ zwei dimensionslose Konstanten bedeuten.

11. Schaltung nach einem der Ansprüche 4 bis 10, dadurch gekennzeichnet, daß der zweite Verstärker (15) der Bedingung

$$(4) \qquad \frac{U_2}{U_b} = a_2 \frac{U_a}{U_b} + b_2$$

gehorcht, wobei $U_2$ die Ausgangsspannung des Verstärkers (15), $U_a$ die Eingangsspannung des Verstärkers (15) und $U_b$ eine Bezugsspannung, alle in Volt, und $a_2$ und $b_2$ zwei wählbare dimensionslose Konstanten bedeuten.

12. Schaltung nach einem der Ansprüche 4 bis 11, dadurch gekennzeichnet, daß die Eingangsspannung $U_a$ für die beiden Verstärker (14, 15) der Funktion

$$(2) \qquad \frac{U_a}{U_b} = \frac{\vartheta - \vartheta_a}{\vartheta_b - \vartheta_a}$$

gehorcht, wobei $U_a$ die Eingangsspannung beider Verstärker (14, 15), $U_b$ die Bezugsspannung in Volt und $\vartheta$ die laufende Eingangsgröße, insbesondere die Außentemperatur in Grad Celsius, und $\vartheta_a$ und $\vartheta_b$

9

zwei wählbare Konstanten in Grad Celsius bedeuten.

13. Schaltung nach einem der Ansprüche 10 und 11, dadurch gekennzeichnet, daß der Quotient der linearen Glieder der Verstärkungsfaktoren ($a_1$ und $a_2$) der Verstärker (14 und 15) folgender Gesetzmäßigkeit gehorchen:

$$(5) \quad \frac{a1}{a2} = 1 + \frac{P_0 T_0}{\tau}$$

wobei $T_0$ die Periodendauer, $\tau$ die Integrationskonstante des Integrators 19 und $P_0$ eine dimensionslose Konstante sind.

14. Schaltung nach einem der Ansprüche 10 und 11 oder 13, dadurch gekennzeichnet, daß der Quotient der absoluten Glieder ($b_1$ und $b_2$) der Verstärkungsfaktoren der Verstärker (14 und 15) folgender Gesetzmäßigkeit gehorcht:

$$(6) \quad \frac{b1}{b2} = 1 + \frac{P_0 T_0}{\tau} \cdot \frac{\vartheta_a - \vartheta_1}{\vartheta_a - \vartheta_2}$$

15. Schaltung nach den Ansprüchen 12 und 14, dadurch gekennzeichnet, daß $\vartheta_a$ sowohl kleiner als $\vartheta_1$ als auch kleiner als $\vartheta_2$ ist.

16. Schaltung nach den Ansprüchen 12 und 14, dadurch gekennzeichnet, daß der Wert $\vartheta_b$ sowohl größer als $\vartheta_1$ als auch größer als $\vartheta_2$ ist.

17. Schaltung nach Anspruch 12, dadurch gekennzeichnet, daß der Quotient $U_a/U_b$ zwischen $\vartheta_a$ und $\vartheta_b$ mit der Eingangsgröße, insbesondere der Außentemperatur $\vartheta$, linear ansteigend ist.

18. Schaltung nach Anspruch 12, dadurch gekennzeichnet, daS der Quotient aus $b_2$ und $a_2$ der Verstärker (14, 15) folgender Gesetzmäßigkeit gehorcht.

$$(7) \quad \frac{b2}{a2} = \frac{\vartheta_a - \vartheta_2}{\vartheta_b - \vartheta_a}$$

19. Schaltung nach einem der Ansprüche 4 bis 7, dadurch gekennzeichnet, daß der Integrator (19) einen Steuereingang (23) aufweist, der an eine Spannung mit der Periodendauer $T_0$ angeschlossen ist ,und daß für den Fall eines Nichtanstehens eines Spannungssignals an der Ansteuerleitung (23) der Integrator (19) als Spannungsverstärker mit dem Verstärkungsfaktor eins arbeitet.

20. Schaltung nach einem der Ansprüche 4 bis 17, dadurch gekennzeichnet, daß die Betätigungseinrichtung (27) einen Steuereingang aufweist, der in Abhängigkeit von der Periodendauer mit einem Steuersignal beaufschlagt wird.

**Claims**

1. A method of controlling an electric output variable in that it is interrupted in accordance with a mark-to-space ratio, characterized in that the ratio meets the following relationship

$$(1) \quad P/T_o = P_0 \frac{\vartheta - \vartheta_1}{\vartheta - \vartheta_2}$$

in which $P/T^o$ is the mark-to-space ratio within one period, $P_o$ is a non-dimensional constant, $T_o$ is the period time in seconds $\vartheta$ a linearly variable input variable and $\vartheta_1$ and $\vartheta_2$ are selected constants.

2. A process according to claim 1, wherein the output variable serves to energize an electromagnetic expansion valve of a heat pump to define the open and closed states of the expansion valve in accordance with the mark-to-space ratio, characterized in that in the rationship which determines the mark-to-space ratio $\vartheta$ is the current outdoor temperature in degrees centigrade and $\vartheta_1$ and $\vartheta_2$ are selected constants in degrees centigrade.

3. A process according to claim 1, wherein the output variable serves to energize an electric motor of an exhaust gas fan of a fuel-firing heat source and thus to control the speed of the exhaust gas fan, characterized in that square-wave voltage signal is generated with a mark-to-space ratio in accordance with the relationship which determines the mark-to-space ratio, wherein $\vartheta$ is a variable input variable in volts and $\vartheta_1$ and $\vartheta_2$ are selected constants in volt and a time average of said voltage signal is determined by an RC element and represents a desired speed value.

4. A circuit for controlling an electric output variable in that it is interrupted in accordance with a mark-to-space ratio, characterized in that two amplifiers (14, 15) are provided, which are fed with a voltage signal ($U_a$), which is variable in linear relationship to an input variable, particularly the outdoor temperature, the output of the first amplifier (14) is connected to the input of a comparator (18), the output of which constitutes one input of an AND gate (24), the output of the second amplifier (15) is connected to the input of an integrator (19), the output of which is connected to the second input of the comparator (18) and to which a square-wave voltage of having the period time $T_o$ is applied, the square-wave voltage constitutes the second input of the AND gate (24) and the AND gate (24) is succeeded by an actuator, particularly for the expansion valve of a heat pump.

5. A circuit according to claim 4, characterized in that the integrator (19) is a controlled integrator.

6. A circuit according to claim 5, characterized in that the integrator corsists of a series connection of a resistor (32) and a capacitor (33), which is fed by a controlled constant-current source (30).

7. A circuit according to claim 6, characterized in that a switch (36) is provided, which serves to control the integrator and is connected in parallel to the capacitor (33) of the integrator and discharges the capacitor (33) entirely or in part in dependence on the period time $T_o$.

8. A circuit according to either of claim 6 or 7, characterized in that the controlled constant-current source (30) delivers a constant current, which is variable in dependence on the magnitude of the input variable, preferably the outdoor temperature.

9. A circuit according to any of claims 6 to 8, characterized in that the controlled constant-current source (30) is arranged in the output of the amplifier (15).

10. A circuit according to any of claims 4 to 9, characterized in that the one amplifier (14) complies with the condition.

(3) $\quad \frac{U_1}{U_b} = a_1 \frac{U_a}{U_b} + b_1$

wherein $U_1$ is the voltage at the output of the amplifier (14), $U_b$ is a reference voltage, $U_a$ is the input voltage of the amplifier (14), all in volts, and $a_1$ and $b_1$ are two non-dimensional constants.

11. A circuit according to any of claims 4 to 10, characterized in that the second amplifier (15) complies with the condition

(4)     $\frac{U_2}{U_b} = a_2 \frac{U_a}{U_b} + b_2$

wherein $U_2$ is the output voltage of the amplifier (15), $U_a$ the input voltage of the amplifier (15) and $U_b$ a reference voltage, all in volts, and $a_2$ and $b_2$ are two selectable non-dimensional constants.

**12.** A circuit according to any of claims 4 to 11, characterized in that the input voltage $U_a$ of the two amplifiers (14, 16) complies with the function

$$(2) \quad \frac{U_a}{U_b} = \frac{\vartheta - \vartheta_a}{\vartheta_b - \vartheta_a}$$

wherein $U_a$ is the input voltage of both amplifiers (14, 15), $U_b$ the reference voltage in volts and the current input variable, particularly the outdoor temperature in degrees Centigrade, and $\vartheta_a$ and $\vartheta_b$ bare two selectable constants in degrees Centigrade.

**13.** A circuit according to claim 10 or 11, characterized in that the quotient of the linear terms of the gains ($a_1$ and $a_2$) of the amplifiers (14 and 15) comply with the following relationship

$$(5) \quad \frac{a_1}{a_2} = 1 + \frac{P_o T_o}{\tau}$$

wherein $T_o$ is the period time, $\tau$ the integration constant of the integrator 19 and $P_o$ a non-dimensional constant.

**14.** A circuit according to claim 10, 11 or 13, characterized in that the quotient of the absolute terms ($b_1$ and $b_2$) of the amplification gains of the amplifiers (14 and 15) complies with the following relationship

$$(6) \quad \frac{b_1}{b_2} = 1 + \frac{P_o T_o}{\tau} \times \frac{\vartheta_a - \vartheta_1}{\vartheta_a - \vartheta_2}$$

**15.** A circuit according to claims 12 and 14, characterized in that $\vartheta_a$ is smaller than $\vartheta_1$ and smaller than $\vartheta_2$.

**16.** A circuit according to claims 12 and 14, characterized in that the value $\vartheta_b$ is larger than $\vartheta_1$ and larger than $\vartheta_2$.

**17.** A circuit according to claim 12, characterized in that the quotient $U_a/U_b$ between $\vartheta_a$ and $\vartheta_b$ increases in linear relationship to the input variable, particularly the outdoor temperature $\vartheta$.

**18.** A circuit according to claim 12, characterized in that the quotient of $b_2$ and $a_2$ of the amplifiers (14, 15) complies with the following relationship

$$(7) \quad \frac{b_2}{a_2} = \frac{\vartheta_a - \vartheta_2}{\vartheta_b - \vartheta_a}$$

**19.** A circuit according to any of claims 4 to 7, characterized in that the integrator (19) has a control input

12

(23), which is connected to a voltage having the period time $T_o$ and when a voltage signal is not applied to the control line (23) the integrator (19) operates as a voltage amplifier having unity gain.

20. A circuit according to any of claims 4 to 17, characterized in that the actuator (27) has a control input, to which a control signal is fed in dependence on the period time.

**Revendications**

1. Procédé de régulation pour une grandeur de sortie électrique moyennant une interruption suivant le facteur d'utilisation des impulsions, caractérisé par le fait que ce facteur s'établit suivant la relation:

$$(1) \qquad P/T_o = P_o \frac{\vartheta - \vartheta_1}{\vartheta - \vartheta_2}$$

$P/T_o$ étant le taux de charge pendant une période, $P_o$ une constante sans dimensions, $T_o$ la durée d'une période en secondes, $\vartheta$ une grandeur d'entrée variant linéairement et $\vartheta_1$ et $\vartheta_2$ des constantes choisies.

2. Procédé suivant la revendication 1, où la grandeur de sortie sert à commander un détendeur électromagnétique d'une thermopompe pour régler les durées d'ouverture et de fermeture du détendeur suivant le facteur d'utilisation des impulsions, caractérisé par le fait que, dans la relation déterminant le facteur d'utilisation des impulsions, $\vartheta$ représente la température extérieure en degrés Celsius, et $\vartheta_1$ et $\vartheta_2$, des constantes choisies en degrés Celsius.

3. Procédé suivant la revendication 1, où la grandeur de sortie sert à commander un moteur électrique d'un ventilateur de gaz de combustion d'une source de chaleur marchant sur un combustible pour régler la vitesse dudit ventilateur, caractérisé par le fait qu' il est produit un signal de tension électrique rectangulaire avec un taux d'impulsions suivant la relation déterminant le facteur d'utilisation des impulsions, $\vartheta$ étant une grandeur d'entrée variable avec la dimension 'volt', et $\vartheta_1$ et $\vartheta_2$, des constantes en volts, et qu'à partir de ce signal de tension, il est formé, moyennant un circuit RC, une moyenne de temps qui représente une consigne de vitesse.

4. Montage pour la régulation d'une grandeur de sortie électrique moyennant une interruption suivant le facteur d'utilisation des impulsions, caractérisé par le fait qu'il est prévu deux amplificateurs (14, 15) alimentés par un signal de tension ($U_a$) variant linéairement avec une grandeur d'entrée, notamment la température extérieure, et que la sortie du premier amplificateur (14) est reliée à l'entrée d'un comparateur (18) dont la sortie forme une entrée d'un circuit ET (24), et que la sortie du deuxième amplificateur (15) est reliée à l'entrée d'un intégrateur (19) dont la sortie est reliée à la deuxième entrée du comparateur (18) et reçoit une tension rectangulaire de la durée de période $T_o$, cette tension rectangulaire formant la deuxième entrée du circuit ET (24), et que le circuit ET (24) est suivi d'un organe de manoeuvre, notamment pour le détendeur d'une thermopompe.

5. Montage suivant la revendication 4, caractérisé par le fait que l'intégrateur (19) est asservi.

6. Montage suivant la revendication 5, caractérisé par le fait que l'intégrateur est formé par un montage en série d'une résistance (32) et d'un condensateur (33) alimenté par une source de courant constant (30) asservie.

7. Montage suivant la revendication 6, caractérisé par le fait qu'il est prévu un contact (36) commandant l'intégrateur et disposé parallèlement au condensateur (33) de l'intégrateur, et qui décharge complètement ou partiellement le condensateur (33) en fonction de la durée de période $T_o$.

8. Montage suivant l'une des revendications 6 ou 7, caractérisé par le fait que la source de courant constant (30) asservie débite un courant constant variant en fonction de la valeur de la grandeur d'entrée, de préférence de la température extérieure.

**9.** Montage suivant l'une des revendications 6 ou 8, caractérisé par le fait que la source de courant constant (30) asservie est disposée dans la sortie de l' amplificateur (15).

**10.** Montage suivant l'une des revendications 4 à 9, caractérisé par le fait que l'amplificateur (14) fonctionne suivant la relation:

$$(3) \quad \frac{U1}{Ub} = a_1 \frac{Ua}{Ub} + b_1$$

$U_1$ étant la tension à la sortie de l'amplificateur (14), $U_b$ une tension de référence, $U_a$ la tension d'entrée de l'amplificateur (14), toutes en volts, et $a_1$ et $b_1$ deux constantes sans dimensions.

**11.** Montage suivant l'une des revendications 4 à 10, caractérisé par le fait que l'amplificateur (15) fonctionne suivant la relation:

$$(4) \quad \frac{U2}{Ub} = a_2 \frac{Ua}{Ub} + b_2$$

$U_2$ étant la tension à la sortie de l'amplificateur (15), $U_b$ une tension de référence, $U_a$ la tension d'entrée de l'amplificateur (15), toutes en volts, et $a_2$ et $b_2$ deux constantes choisies sans dimensions.

**12.** Montage suivant l'une des revendications 4 à 11, caractérisé par le fait que la tension d'entrée $U_a$ pour les deux amplificateurs (14,15) suit la relation

$$(2) \quad \frac{Ua}{Ub} = \frac{\vartheta - \vartheta_a}{\vartheta_b - \vartheta_a}$$

$U_a$ étant la tension d'entrée des deux amplificateurs (14, 15), $U_b$ la tension de référence en volts, $\vartheta$ la grandeur d'entrée variable, de préférence la température extérieure en degrés Celsius, et $\vartheta_a$ et $\vartheta_b$ deux constantes choisies en degrés Celsius.

**13.** Montage suivant l'une des revendications 10 et 11, caractérisé par le fait que le quotient des éléments linéaires des facteurs d'amplification ($a_1$ et $a_2$) des amplificateurs (14 et 15) obéit à la loi suivante:

$$(5) \quad \frac{a1}{a2} = 1 + \frac{PoTo}{\tau}$$

$T_o$ représentant la durée de période, la constante d'intégration de l'intégrateur 19 et $P_o$ une constante sans dimensions.

**14.** Montage suivant l'une des revendications 10 et 11 ou 13, caractérisé par le fait que le quotient des éléments absolus ($b_1$ et $b_2$) des facteurs d'amplification des amplificateurs (14 et 15) obéit à la loi suivante:

$$(6) \quad \frac{b1}{b2} = 1 + \frac{PoTo}{\tau} \quad \frac{\vartheta_a - \vartheta_1}{\vartheta_a - \vartheta_2}$$

**15.** Montage suivant les revendications 12 et 14, caractérisé par le fait que $\vartheta a$ est inférieur aussi bien à $\vartheta_1$ qu'à $\vartheta_2$.

**16.** Montage suivant les revendications 12 et 14, caractérisé par le fait que la valeur $\vartheta_b$ est supérieur aussi bien à $\vartheta_1$ qu'à $\vartheta_2$.

14

**17.** Montage suivant la revendication 12, caractérisé par le fait que le quotient $U_a/U_b$ croît linéairement entre $\vartheta_a$ et $\vartheta_b$ avec la grandeur d'entrée, notamment avec la température extérieure $\vartheta$.

**18.** Montage suivant la revendication 12, caractérisé par le fait que le quotient de $b_2$ et $a_2$ des amplificateurs (14, 15) suit la relation ci-après:

$$(7) \quad \frac{b2}{a2} = \frac{\vartheta_a - \vartheta_2}{\vartheta_b - \vartheta_a}$$

**19.** Montage suivant l'une des revendications 4 à 7, caractérisé par le fait que l'intégrateur (19) comporte une entrée (23) connectée à une tension de période $T_o$, et qu'à défaut d'un signal de tension sur la ligne (23) l'intégrateur (19) fonctionne comme amplificateur de tension avec le facteur 1.

**20.** Montage suivant l'une des revendications 4 à 17, caractérisé par le fait que l'organe de manoeuvre (27) comporte une entrée recevant un signal de commande en fonction de la période.

15

Fig. 1

Fig. 2

Fig. 3

Fig. 4

Fig. 5

Fig. 6